# EUROPÄISCHE PATENTSCHRIFT

(11) **EP 3 018 500 B1**
(45) Veröffentlichungstag und Bekanntmachung des Hinweises auf die Patenterteilung: **19.01.2022**
(21) Anmeldenummer: 14192485.2
(22) Anmeldetag: 10.11.2014
(51) Int. Cl.: G01S 7/481, G01S 17/42, G01V 8/26

(54) **Optoelektronischer Sensor**
Optoelectronic sensor
Capteur optoélectronique

(43) Veröffentlichungstag der Anmeldung: 11.05.2016
(73) Patentinhaber: SICK AG, 79183 Waldkirch (DE)
(72) Erfinder: Gimpel, Hartmut, 79194 Gundelfingen (DE)
(74) Vertreter: Manitz Finsterwald Patent- und Rechtsanwaltspartnerschaft mbB

(56) Entgegenhaltungen:
- EP-A1- 1 978 376
- EP-A1- 2 672 287
- WO-A2-2006/109298
- DE-U1-202013 103 233
- DE-U1-202014 104 741
- FR-A1- 2 643 987

## Beschreibung

Die Erfindung betrifft einen optoelektronischen Sensor zur Erfassung von Objekten in einem dreidimensionalen Überwachungsbereich, welcher mehrere Abtastbereiche aufweist, gemäß dem Oberbegriff von Anspruch 1.

Mit einem solchen optoelektronischen Sensor kann das Vorhandensein von Objekten in dem Überwachungsbereich bestimmt werden. Dazu wird mittels eines Abtast- oder Sendelichtstrahls der Überwachungsbereich abgetastet und das von einem Objekt bzw. Hintergrund remittierte oder reflektierte Licht ausgewertet. Es gibt in einer Abwandlung auch entfernungsmessende Laserscanner. Diese können nicht nur die Anwesenheit von Objekten, sondern auch deren Entfernung bestimmen, um zusätzlich Informationen über Objektabstände, Konturen oder Profile zu gewinnen.

Bei den genannten Sensoren wird der Sendelichtstrahl mit Hilfe einer Scanvorrichtung periodisch um eine Rotationsachse rotiert, so dass in Abhängigkeit vom Winkel zwischen dem Sendelichtstrahl und der Rotationsachse ein kreisförmiger oder ein kegelförmiger Abtastbereich bzw. Segmente davon abgetastet werden. Die Rotation des Sendelichtstrahls kann beispielsweise mit Hilfe eines rotierenden Spiegels erfolgen.

Wenn mehrere, sich in unterschiedliche Raumrichtungen erstreckende Abtastbereiche erfasst werden sollen, wird bei bekannten Lösungen zum Beispiel ein sogenanntes Facettenspiegelrad verwendet, welches mehrere spiegelnde Flächen aufweist, die unterschiedliche Neigungswinkel in Bezug auf die Rotationsachse besitzen und die zeitlich nacheinander den Sendelichtstrahl in die verschiedenen Abtastbereiche umlenken. Die Erfassung des remittierten oder reflektierten Sendelichtstrahls kann mit Hilfe eines einzigen Lichtempfängers erfolgen, wobei die erforderliche Umlenkung aus dem jeweils aktiven Abtastbereich mit Hilfe desselben oder eines weiteren Facettenspiegelrades erfolgt. Alternativ ist es auch möglich, mehrere Lichtempfänger zu verwenden, die jeweils einem bestimmten Abtastbereich zugeordnet sind.

Anstelle eines einzigen Sendelichtstrahls, mit dem nacheinander die Abtastbereiche abgetastet werden, können auch mehrere Lichtsender verwendet werden, die einem jeweiligen Abtastbereich fest zugeordnet sind.

Weiterhin ist es möglich, einen einzigen Sendelichtstrahl mit Hilfe eines geeigneten optischen Bauteils, zum Beispiel einer einzigen Zylinderlinse, so aufzuweiten, dass er gleichzeitig in alle Abtastbereiche ausgesendet wird.

Die genannten Lösungen haben jedoch verschiedene spezifische Nachteile, wenn der Überwachungsbereich zur Verbesserung der räumlichen Auflösung in eine große Anzahl von Abtastbereichen unterteilt werden soll.

Bei der Ausführungsform mit Facettenspiegelrad werden die Abtastbereiche immer nacheinander oder seriell abgetastet. Das führt dazu, dass bei einer großen Anzahl von Abtastbereichen die Messdauer für eine vollständige Abtastung des gesamten Überwachungsbereichs proportional zunimmt. Eine lange Messdauer ist jedoch insbesondere bei sicherheitskritischen Anwendungen unerwünscht.

Bei der Ausführungsform mit einem einzigen Sendelichtstrahl, der mit Hilfe eines geeigneten optischen Bauteils kontinuierlich aufgeweitet wird, kann nur ein relativ kleiner Raumwinkelbereich abgetastet werden, da bei einer Aufweitung in einen großen Winkelbereich die auf einen einzelnen Abtastbereich entfallende Lichtintensität zu stark abnehmen würde. Da ferner die Abtastbereiche in der Regel nicht unmittelbar aneinander angrenzen, sondern durch Zwischenbereiche voneinander getrennt sind, die von den Lichtempfängern nicht erfasst werden, bleibt das in diese Zwischenbereiche emittierte Sendelicht ungenutzt.

Zur Umgehung der Intensitätsproblematik kann jedem Abtastbereich ein eigener Lichtsender zugeordnet werden. Da aber bei dieser Lösung jeder Lichtsender in der Regel auch eine eigene Sendeoptik erhalten muss, erhöht sich der Aufwand für Material, Montage und Justage.

Aus EP 2 672 287 A1 ist ein Reinigungsroboter mit einem Hinderniserkennungssensor bekannt, dessen Lichtquelle fächerförmiges planares Licht emittiert.

WO 2006/109298 A2 offenbart ein System zur Erzeugung eines optischen Schirms in Form eines sektorförmigen Lichtfelds mit einer gleichmäßigen Wellenfront.

Es ist daher die Aufgabe der Erfindung, einen optoelektronischen Sensor zu schaffen, der die genannten Nachteile des Standes der Technik möglichst weitgehend vermeidet.

Die Lösung der Aufgabe erfolgt durch einen optoelektronischen Sensor mit den Merkmalen des Anspruchs 1. Demnach umfasst die Lichtsendeeinheit einen Lichtsender zum Erzeugen des Sendelichtstrahls und eine Strahlteilungseinrichtung zum Aufteilen des Sendelichtstrahls in mehrere räumlich voneinander getrennte Sendelichtteilstrahlen. Gegenüber einer kontinuierlichen Aufweitung des Sendelichtstrahls ist in den Sendelichtteilstrahlen eine höhere Lichtdichte konzentriert. Eine Ausstrahlung von Sendelicht in ungenutzte Raumbereiche wird dadurch weitgehend vermieden. Dadurch ist es vorteilhafterweise möglich, mit nur einem einzigen Lichtsender, beispielsweise einen Laser oder eine Laserdiode, auszukommen, was sowohl den Materialaufwand als auch den Zeitaufwand für die Montage und die Justage reduziert. Eine bevorzugte Ausführungsform umfasst daher auch nur eine einzige Lichtquelle.

Die Aufteilung des Sendelichtstrahls in die Sendelichtteilstrahlen erfolgt dabei bevorzugt nur in eine Raumrichtung, so dass die Sendelichtteilstrahlen innerhalb einer Ausbreitungsebene liegen, welche vorteilhafterweise parallel zur Rotationsachse verläuft. Diese Ausbreitungsebene rotiert demnach um die Rotationsachse. Die Strahlteilungseinrichtung wird dabei so ausgewählt, dass die Sendelichtteilstrahlen innerhalb der Ausbreitungsebene zueinander divergent verlaufen. Es ist jedoch auch denkbar, die Strahlteilungseinrichtung so auszugestalten, dass die Sendelichtteilstrahlen parallel und voneinander beabstandet verlaufen.

Gemäß einer vorteilhaften Ausführungsform umfasst die Strahlteilungseinrichtung ein diffraktives optisches Element, insbesondere ein Gitter, oder ein Zylinderlinsenarray. Dadurch lässt sich auf einfache Weise die Aufteilung des Sendelichtstrahls in diskrete Sendelichtteilstrahlen bewirken.

Vorteilhafterweise ist ein jeweiliger Sendelichtteilstrahl einem bestimmten Abtastbereich zugeordnet und erstreckt sich entlang eines zugeordneten Sendelichtpfades, wobei der Sendelichtpfad eines jeweiligen Abtastbereichs und ein Empfangslichtpfad des diesem Abtastbereich zugeordneten Empfangsbereichs im Wesentlichen deckungsgleich zueinander sind. Mit anderen Worten breiten sich das Sendelicht und das von einem Objekt reflektierte bzw. remittierte Licht innerhalb eines jeweiligen Abtastbereichs im Wesentlichen auf demselben Pfad aus. Abweichungen von diesem gemeinsamen Lichtpfad können sich allenfalls dadurch ergeben, dass aufgrund konstruktiver Gegebenheiten die Lichtsendeeinheit und die Lichtempfangseinheit nicht in einer Weise angeordnet werden können, dass die Sendeund Empfangslichtpfade nicht absolut deckungsgleich verlaufen und somit ein geringfügiger Parallaxenfehler auftritt.

Gemäß einer weiteren vorteilhaften Ausführungsform weist die Lichtempfangseinheit eine gemeinsame Empfangsoptik für alle Empfangsbereiche auf. Daraus ergibt sich eine weitere Reduzierung der Material- und Justagekosten, da nur eine einzige Empfangsoptik verbaut und justiert werden muss. Zudem wird durch die Position der Empfangsoptik in Bezug auf die Empfangsbereiche auch die räumliche Lage der Abtastbereiche auf einfache Weise definiert. Nach den Gesetzen der Triangulation bestimmt sich deren Lage nämlich im Wesentlichen durch den Abstand der Empfangsbereiche zueinander und dem Abstand der Empfangsbereiche zur Empfangsoptik.

Die Empfangsoptik ist vorzugsweise als Sammellinse ausgestaltet, insbesondere als eine sogenannte Meniskuslinse, bei welcher die eine Seite konvex und die andere Seite konkav gewölbt ist. Es kann eine einlinsige oder eine mehrlinsige Empfangsoptik verwendet werden.

Gemäß einer weiteren vorteilhaften Ausführungsform ist die Strahlteilungseinrichtung unmittelbar an die Empfangsoptik angrenzend angeordnet und bevorzugt an der Empfangsoptik befestigt. Dadurch weisen die Sendelichtpfade und zugeordneten Empfangslichtpfade eine größtmögliche Kongruenz auf und etwaige Parallaxenfehler werden minimiert. Zudem vereinfacht sich der Montage- und Justageaufwand noch weiter, wenn die Strahlteilungseinrichtung und die Empfangsoptik eine Baugruppe bilden.

Vorteilhafterweise ist die Strahlteilungseinrichtung innerhalb der Apertur der Empfangsoptik, bevorzugt außermittig angeordnet. Dadurch lässt sich ein etwaiger Parallaxenfehler noch weiter vermindern. Zudem besteht die Möglichkeit, die Empfangsoptik zugleich als Sendeoptik für den Sendelichtstrahl bzw. die Sendelichtteilstrahlen zu verwenden, was den Aufwand bei der Justierung ebenfalls reduziert. Grundsätzlich ist es auch möglich, eine separate Sendeoptik vorzusehen, die insbesondere mit der Strahlteilungseinrichtung gekoppelt ist. Weiterhin kann die Empfangsoptik eine Ausnehmung aufweisen, in deren Bereich die Strahlteilungseinrichtung und/oder eine Sendeoptik angeordnet sind. Dadurch wird ausgeschlossen, dass die Empfangsoptik strahlformend auf den Sendelichtstrahl bzw. die Sendelichtteilstrahlen einwirkt.

Erfindungsgemäß ist vorgesehen, dass die Scanvorrichtung eine Basis umfasst, an der die Lichtsendeeinheit und die Lichtempfangseinheit gemeinsam gehalten sind. Somit rotieren die Lichtsendeeinheit und die Lichtempfangseinheit gemeinsam, so dass Streuverluste, wie sie naturgemäß an Grenzflächen einer Ablenkeinheit auftreten, vermieden werden, so dass sich die Detektionsempfindlichkeit des Sensors erhöht.

Gemäß einer weiteren bevorzugten Ausführungsform der Erfindung sind die Empfangsbereiche der Lichtempfangseinheit durch jeweilige räumlich voneinander getrennte, bevorzugt linear angeordnete Empfangselemente gebildet. Da sich der Abstand der Empfangsbereiche bzw. der Empfangselemente frei wählen lässt, ist eine einfachere Anpassung der Empfangsgeometrie, insbesondere der räumlichen Lage der verschiedenen Abtastbereiche, möglich. Durch eine Variation der Abstände der Empfangselemente können beispielsweise innerhalb des Überwachungsbereichs Bereiche mit höherer und niedrigerer Ortsauflösung definiert werden. Obwohl auch eine Empfängerzeile, beispielsweise eine CCD- oder Fotodiodenzeile verwendet werden kann, wird durch die Verwendung von diskreten Empfangselementen eine verbesserte Ortsauflösung möglich.

Bevorzugt sind die Empfangsbereiche durch Avalanche-Fotodioden, insbesondere durch Einzelphotonen-Avalanche-Fotodioden, gebildet. Derartige Fotodioden weisen eine besonders hohe Empfindlichkeit auf, so dass auch schwach reflektierende oder remittierende Objekte noch zuverlässig detektiert werden können, was insbesondere bei sicherheitskritischen Anwendungen von Vorteil ist.

Gemäß einer weiteren bevorzugten Ausführungsform der Erfindung ist der optoelektronische Sensor als ein entfernungsmessender Laserscanner nach dem Prinzip des Lichtlaufzeitverfahrens (TOF (Time-Of-Flight)-Laserscanner) ausgebildet. Dazu wird entweder bei einem Pulslaufzeitverfahren ein kurzer Lichtpuls ausgesandt und die Zeit bis zum Empfang einer Reflexion des Lichtpulses gemessen, oder es wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. So können nicht nur allgemein Objekte detektiert werden, sondern auch Informationen über Objektabstände, Konturen oder Profile gewonnen werden.

Weitere bevorzugte Ausführungsformen der Erfindung ergeben sich aus den Unteransprüchen, der Beschreibung und der Zeichnung.

Die Erfindung wird nachfolgend anhand eines Ausführungsbeispiels mit Bezug auf die Zeichnung beschrieben. Es zeigen:
- Fig. 1: eine schematische Seitenansicht eines erfindungsgemäßen optoelektronischen Sensors;
- Fig. 2: eine Draufsicht einer mit einem Strahlteiler gekoppelten Empfangsoptik des optoelektronischen Sensors von Fig. 1; und
- Fig. 3: eine Seitenansicht der Empfangsoptik von Fig. 2.

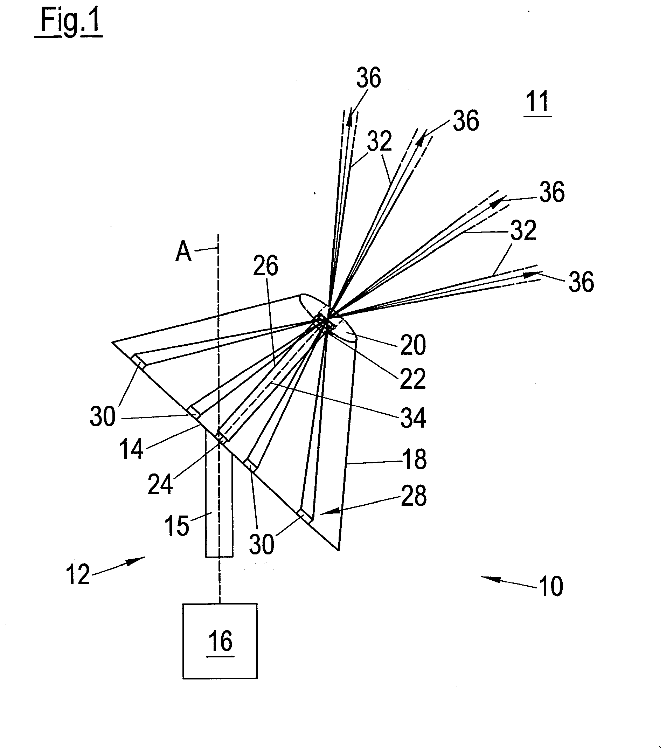

Fig. 1 zeigt einen optoelektronischen Sensor 10 zur Erfassung von Objekten in einem dreidimensionalen Überwachungsbereich 11, welcher sowohl als entfernungsmessender Laserscanner als auch als mehrstrahliger Lichttaster ohne Entfernungsmessung ausgebildet sein kann. Die Darstellung ist nicht maßstäblich.

Der Sensor 10 umfasst eine Scanvorrichtung 12, welche eine um eine Rotationsachse A rotierbare Basis 14 aufweist. Die Basis 14 ist zur Rotationsachse A geneigt und über ein Verbindungsstück 15 mit einer Antriebseinheit 16 gekoppelt.

Die Basis 14 weist eine ebene Fläche auf, auf welcher ein Lichtsender 14, beispielsweise eine Laserdiode, und eine Lichtempfangseinheit 28 angeordnet sind, welche im Ausführungsbeispiel vier Empfangselemente 30 umfasst. Die Empfangselemente 30 sind entlang einer Geraden voneinander beabstandet angeordnet und bilden Empfangsbereiche der Lichtempfangseinheit 28. Als Empfangselemente 30 können Avalanche-Fotodioden, insbesondere Einzelphotonen-Avalanche-Fotododen, vorgesehen werden. Diese zeichnen sich durch eine besonders hohe Lichtempfindlichkeit aus. Grundsätzlich kann jedoch auch eine integrierte Empfängerzeile, beispielsweise CCD- oder Fotodiodenzeile, verwendet werden.

Im vorliegenden Ausführungsbeispiel sind - wie erwähnt - aus Gründen der Übersichtlichkeit lediglich vier Empfangselemente 30 vorgesehen. Für eine gute räumliche Auflösung können beispielsweise insgesamt 15 Empfangselemente 30 vorgesehen werden, welche einen Abstand zu einem benachbarten Empfangselement 30 von 0,5 mm aufweisen und deren Empfangsbereiche beispielsweise eine Seitenlänge von 0,5 mm besitzen.

An der Basis 14 ist ein trapezförmiger Träger 18 gehalten, welcher eine Baueinheit aus einer Empfangsoptik 20 und einer Strahlteilungseinrichtung 22, beispielsweise einem diffraktiven optischen Element, insbesondere einem Gitter, oder einem Zylinderlinsenarray, von der Basis 14 beabstandet trägt.

Der von dem Lichtsender 24 emittierte Sendelichtstrahl 34 wird über einen Sendelichttubus 26 zu der Strahlteilungseinrichtung 22 geführt.

Durch die lichtempfindlichen Bereiche der Empfangselemente 30 und der Empfangsoptik 20 werden Abtastbereiche 32 definiert, aus denen von einem Objekt remittiertes oder reflektiertes Sendelicht mittels der Empfangselemente 30 empfangen werden kann.

Die Strahlteilungseinrichtung 22 teilt den Sendelichtstrahl 34 auf der Grundlage von Lichtbeugung oder Lichtbrechung in vier divergente, voneinander beabstandete Sendelichtteilstrahlen 36 auf, welche sich im Wesentlichen innerhalb der Abtastbereiche 32 ausbreiten. Wenn die Sendelichtteilstrahlen 36 auf ein Objekt treffen, wird dieses zumindest teilweise in Richtung auf den Sensor 10 reflektiert oder remittiert. Die in Fig. 1 dargestellten Abtastbereiche 32 umgeben demnach sowohl den Sendelichtpfad als auch den Empfangslichtpfad.

Da die Scanvorrichtung 12 eine periodische Änderung der Ausbreitungsrichtung des Sendelichtstrahls 34 bzw. der Sendelichtteilstrahlen 36 bewirkt, sind die in Fig. 1 zweidimensional dargestellten Abtastbereiche 32 tatsächlich konzentrische Kegelmäntel (bzw. Kegelstumpfmäntel), welche eine gewisse Dicke aufweisen.

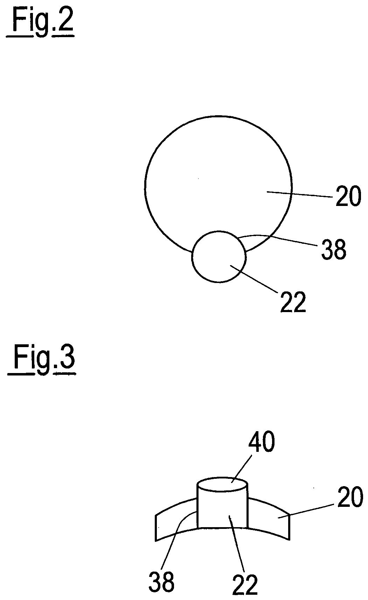

Um eine Abschattung der im Bereich des Trägers 18, d.h. zwischen der Empfangsoptik 20 und den Lichtempfängern 30, verlaufenden Empfangslichtpfade zu vermeiden, ist der Lichtsender 24 gegenüber der Geraden, welche die Empfangselemente 30 miteinander verbindet, seitlich versetzt. Da zusätzlich auch die Strahlteilungseinrichtung 22 von der optischen Achse der Empfangsoptik 20 in gleicher Richtung beabstandet ist (siehe Fig. 2), befindet sich der den Sendelichtpad umgebende Sendelichttubus 26 weitgehend außerhalb der Empfangslichtpfade.

Mit Bezug auf Fig. 2 und 3 wird nachfolgend der Aufbau der Baueinheit aus Empfangsoptik 20 und Strahlteilungseinrichtung 22 näher beschrieben. Die Empfangsoptik 20 ist im Ausführungsbeispiel als konkav-konvexe Sammellinse ausgebildet. Im Umfangsbereich der Empfangsoptik 20 ist eine kreisförmige Ausnehmung 38 vorgesehen, in welcher die kreisförmige Strahlteilungseinrichtung 22 aufgenommen ist. Die Strahlteilungseinrichtung 22 ist mit einer als Sammellinse ausgebildeten Sendeoptik 40 gekoppelt. Der Durchmesser der Strahlteilungseinrichtung 22 entspricht dem Durchmesser der Sendeoptik 40. Alternativ oder zusätzlich kann auch im Bereich des Lichtsenders 24 (Fig. 1) eine Sendeoptik vorgesehen sein.

Die Empfangsoptik 20 kann beispielsweise eine Brennweite von 75 mm, eine wirksame Empfangsapertur von 15 mm und einen Durchmesser von 22 mm aufweisen. Die Sendeoptik 40 kann zum Beispiel eine Brennweite von 9 mm, eine wirksame Apertur von 5 mm und einen effektiven Durchmesser von 7 mm aufweisen. Der Basisabstand, d.h. der Mittenabstand von Sendeoptik 40 und Empfangsoptik 20 kann beispielsweise 10 mm betragen. Mit den genannten geometrischen Werten ergibt sich nur eine geringfügige Abschattung der Empfangslichtpfade.

Da durch die Aufweitung des Sendelichtstrahls 34 in diskrete, voneinander beabstandete Sendelichteilstrahlen 36 im Wesentlichen nur die Abtastbereiche 32, nicht jedoch Bereiche zwischen den Abtastbereichen 32, ausgeleuchtet werden, erhöht sich die in den Abtastbereichen 32 zur Verfügung stehende Intensität des Sendelichts, so dass mit nur einem einzigen Lichtsender 34 ein großer Überwachungsbereich 11 ausgeleuchtet werden kann, ohne dass es zu Einbußen bei der Empfindlichkeit des Sensors kommt oder sich die Dauer eines Abtastzyklus unzumutbar verlängert.

### Bezugszeichenliste

- 10: optoelektronischer Sensor
- 11: Überwachungsbereich
- 12: Scanvorrichtung
- 14: Basis
- 15: Verbindungsstück
- 16: Antriebseinheit
- 18: Träger
- 20: Empfangsoptik
- 22: Strahlteilungseinrichtung
- 24: Lichtsender
- 26: Sendelichttubus
- 28: Lichtempfangseinheit
- 30: Empfangselement
- 32: Abtastbereich
- 34: Sendelichtstrahl
- 36: Sendelichtteilstrahl
- 38: Ausnehmung
- 40: Sendeoptik

- A: Rotationsachse

## Patentansprüche

1. Optoelektronischer Sensor (10) zur Erfassung von Objekten in einem dreidimensionalen Überwachungsbereich (11), welcher mehrere Abtastbereiche (32) aufweist, mit
einer Lichtsendeeinheit zum Aussenden eines Sendelichtstrahls (34) in den Überwachungsbereich (11),
einer ortsauflösenden Lichtempfangseinheit (28) mit entsprechender Empfangsoptik (20) und mehreren Empfangsbereichen zur Erzeugung von Empfangssignalen aus einem in dem Überwachungsbereich (11) remittierten oder reflektierten Sendelichtstrahl, wobei jedem Empfangsbereich ein jeweiliger Abtastbereich (32) derart zugeordnet ist, dass nur ein innerhalb des zugeordneten Abtastbereichs (32) remittierter oder reflektierter Sendelichtstrahl durch den zugehörigen Empfangsbereich empfangen wird,
einer Scanvorrichtung (12), die eine um eine Rotationsachse (A) rotierenden Basis (14) aufweist, an der die Lichtsendeeinheit und die Lichtempfangseinheit (28) gemeinsam gehalten sind, so dass die Scanvorrichtung (12) zu einer periodischen Änderung der Ausbreitungsrichtung des Sendelichtstrahls (34) und einer hierzu synchronen Änderung der Erfassungsrichtung der Lichtempfangseinheit (28) ausgebildet ist, und
einer Auswerteeinheit, welche zur Erfassung der Objekte auf der Grundlage der Empfangssignale ausgebildet ist,
**dadurch gekennzeichnet , dass**
die Lichtsendeeinheit einen Lichtsender (24) zum Erzeugen des Sendelichtstrahls (34) und eine Strahlteilungseinrichtung (22) zum Aufteilen des Sendelichtstrahls (34) in mehrere räumlich voneinander getrennte Sendelichtteilstrahlen (36) umfasst, und
dass der Sensor ferner einen an der Basis (14) gehaltenen trapezförmigen Träger (18) umfasst, welcher eine Baueinheit aus der Empfangsoptik (20) und der Strahlteilungseinrichtung (22) von der Basis (14) beabstandet trägt.

2. Sensor nach Anspruch 1,
**dadurch gekennzeichnet,**
**dass** die Strahlteilungseinrichtung (22) ein Zylinderlinsenarray oder ein diffraktives optisches Element, insbesondere Gitter, ist.

3. Sensor nach Anspruch 1 oder 2,
**dadurch gekennzeichnet ,**
**dass** ein jeweiliger Sendelichtteilstrahl (36) einem bestimmten Abtastbereich (32) zugeordnet ist und sich entlang eines zugeordneten Sendelichtpfades ausbreitet, wobei der Sendelichtpfad eines jeweiligen Abtastbereichs (32) und ein Empfangslichtpfad des diesem Abtastbereich (32) zugeordneten Empfangsbereichs im Wesentlichen deckungsgleich zueinander sind.

4. Sensor nach einem der vorhergehenden Ansprüche,
**dadurch gekennzeichnet,**
**dass** die Lichtempfangseinheit (28) eine gemeinsame Empfangsoptik (20) für alle Empfangsbereiche aufweist.

5. Sensor nach einem der vorhergehenden Ansprüche,
**dadurch gekennzeichnet,**
**dass** die Strahlteilungseinrichtung (22) unmittelbar an die Empfangsoptik (20) angrenzend angeordnet ist und bevorzugt an der Empfangsoptik (20) befestigt ist.

6. Sensor nach Anspruch 5,
**dadurch gekennzeichnet,**
**dass** die Strahlteilungseinrichtung (22) innerhalb der Apertur der Empfangsoptik (20), bevorzugt außermittig, angeordnet ist.

7. Sensor nach einem der vorhergehenden Ansprüche,
**dadurch gekennzeichnet,**
**dass** die Empfangsbereiche der Lichtempfangseinheit (28) durch jeweilige räumlich voneinander getrennte, bevorzugt linear angeordnete Empfangselemente (30) gebildet sind.

8. Sensor nach einem der vorhergehenden Ansprüche,
**dadurch gekennzeichnet,**
**dass** die Empfangsbereiche durch Avalanche-Fotodioden, insbesondere durch Einzelphotonen-Avalanche-Fotodioden gebildet sind.

9. Sensor nach einem der vorhergehenden Ansprüche,
**dadurch gekennzeichnet,**
**dass** der optoelektronische Sensor (10) als ein entfernungsmessender Laserscanner nach dem Prinzip des Lichtlaufzeitverfahrens ausgebildet ist.

## Claims

1. An optoelectronic sensor (10) for detecting objects in a three-dimensional monitored zone (11) which has a plurality of scanning zones (32), said optoelectronic sensor (10) comprising
a light transmission unit for transmitting a transmission light beam (34) into the monitored zone (11);
a spatially resolving light reception unit (28) having corresponding reception optics (2) and a plurality of reception zones for generating reception signals from a transmission light beam remitted or reflected in the monitored zone (11), wherein a respective scanning zone (32) is associated with each reception zone such that only a transmission light beam remitted or reflected within the associated scanning zone (32) is received by the associated reception zone;
a scanning apparatus (12) which has a base (14) which rotates about an axis of rotation (A) and at which the light transmission unit and the light reception unit (28) are jointly held such that the scanning apparatus (12) is configured for a periodic change of the propagation direction of the transmission light beam (34) and for a change of the detection direction of the light reception unit (28) that is synchronous with said periodic change; and
an evaluation unit which is configured to detect the objects on the basis of the reception signals,
**characterized in that**
the light transmission unit comprises a light transmitter (24) for generating the transmission light beam (34) and a beam splitting device (22) for splitting the transmission light beam (34) into a plurality of part transmission light beams (36) spatially separated from one another, and
**in that** the sensor further comprises a trapezoidal carrier (18) which is held at the base (14) and which carries an assembly of the reception optics (20) and the beam splitting device (22) spaced apart from the base (14).

2. A sensor in accordance with claim 1,
**characterized in that**
the beam splitting device (22) is a cylindrical lens array or a diffractive optical element, in particular a grating.

3. A sensor in accordance with claim 1 or claim 2,
**characterized in that**
a respective part transmission light beam (36) is associated with a specific scanning zone (32) and propagates along an associated transmission light path, with the transmission light path of a respective scanning zone (32) and a reception light path of the reception zone associated with this scanning zone (32) being substantially congruent with one another.

4. A sensor in accordance with any one of the preceding claims,
**characterized in that**
the light reception unit (28) has common reception optics (20) for all the reception zones.

5. A sensor in accordance with any one of the preceding claims,
**characterized in that**
the beam splitting device (22) is arranged directly adjoining the reception optics (20) and is preferably fastened to the reception optics (20).

6. A sensor in accordance with claim 5,
**characterized in that**
the beam splitting device (22) is arranged within the aperture of the reception optics (20), preferably off-center.

7. A sensor in accordance with any one of the preceding claims,
**characterized in that**
the reception zones of the light reception unit (28) are formed by respective reception elements (30) which are spatially separated from one another and which are preferably linearly arranged.

8. A sensor in accordance with any one of the preceding claims,
**characterized in that**
the reception zones are formed by avalanche photodiodes, in particular by single photon avalanche photodiodes.

9. A sensor in accordance with any one of the preceding claims,
**characterized in that**
the optoelectronic sensor (10) is configured as a distance-measuring laser scanner in accordance with the principle of the time-of-flight method.

## Revendications

1. Capteur optoélectronique (10) pour la détection d'objets dans une zone à surveiller (11) tridimensionnelle qui présente plusieurs zones de balayage (32), comportant
une unité d'émission de lumière destinée à émettre un faisceau lumineux d'émission (34) dans la zone à surveiller (11),
une unité de réception de lumière (28) à résolution locale, présentant une optique de réception correspondante (20) et plusieurs zones de réception, et destinée à générer des signaux de réception à partir d'un faisceau lumineux d'émission renvoyé ou réfléchi de la zone à surveiller (11), une zone de balayage (32) respective étant associée à chaque zone de réception de telle sorte que seul un faisceau lumineux d'émission renvoyé ou réfléchi à l'intérieur de la zone de balayage (32) associée est reçu par la zone de réception associée,
un dispositif scanner (12) présentant une base (14) qui tourne autour d'un axe de rotation (A) et sur laquelle l'unité d'émission de lumière et l'unité de réception de lumière (28) sont maintenues conjointement, de sorte que le dispositif scanner (12) est réalisé pour un changement périodique de la direction de propagation du faisceau lumineux d'émission (34) et pour un changement synchrone de la direction de détection de l'unité de réception de lumière (28), et
une unité d'évaluation qui est réalisée pour détecter les objets sur la base des signaux de réception,
**caractérisé en ce que**
l'unité d'émission de lumière comprend un émetteur de lumière (24) destiné à générer le faisceau lumineux d'émission (34) et un dispositif de division de faisceau (22) destiné à diviser le faisceau lumineux d'émission (34) en plusieurs faisceaux lumineux d'émission (36) partiels séparés spatialement les uns des autres, et **en ce que**
le capteur comprend en outre un support (18) de forme trapézoïdale qui est maintenu sur la base (14) et qui porte une unité structurelle, constituée par l'optique de réception (20) et par le dispositif de division de faisceau (22), à distance de la base (14).

2. Capteur selon la revendication 1,
**caractérisé en ce que**
le dispositif de division de faisceau (22) est un réseau de lentilles cylindriques ou un élément optique diffractif, en particulier une grille.

3. Capteur selon la revendication 1 ou 2,
**caractérisé en ce que**
un faisceau lumineux d'émission (36) partiel respectif est associé à une zone de balayage (32) déterminée et se propage le long d'un chemin associé de la lumière d'émission, le chemin de la lumière d'émission d'une zone de balayage (32) respective et un chemin de la lumière de réception de la zone de réception associée à ladite zone de balayage (32) étant sensiblement en coïncidence l'un avec l'autre.

4. Capteur selon l'une des revendications précédentes,
**caractérisé en ce que**
l'unité de réception de lumière (28) présente une optique de réception (20) commune pour toutes les zones de réception.

5. Capteur selon l'une des revendications précédentes,
**caractérisé en ce que**
le dispositif de division de faisceau (22) est disposé de manière directement adjacente à l'optique de réception (20) et est de préférence fixé à l'optique de réception (20).

6. Capteur selon la revendication 5,
**caractérisé en ce que**
le dispositif de division de faisceau (22) est disposé à l'intérieur de l'ouverture de l'optique de réception (20), de préférence de manière excentrée.

7. Capteur selon l'une des revendications précédentes,
**caractérisé en ce que**
les zones de réception de l'unité de réception de lumière (28) sont formées par des éléments de réception (30) respectifs séparés spatialement les uns des autres, de préférence disposés de manière linéaire.

8. Capteur selon l'une des revendications précédentes,
**caractérisé en ce que**
les zones de réception sont formées par des photodiodes à avalanche, en particulier par des photodiodes à avalanche à photon unique.

9. Capteur selon l'une des revendications précédentes,
**caractérisé en ce que**
le capteur optoélectronique (10) est réalisé sous forme de scanner laser de mesure de distance selon le principe du temps de vol de lumière.
